# EUROPÄISCHE PATENTSCHRIFT

(11) **EP 2 904 156 B1**
(45) Veröffentlichungstag und Bekanntmachung des Hinweises auf die Patenterteilung: **11.03.2020**
(21) Anmeldenummer: 13774115.3
(22) Anmeldetag: 02.10.2013
(51) Int. Cl.: E03B 7/12, B61D 35/00

(54) **TANKENTLEERUNGSEINRICHTUNG**
TANK DRAINAGE DEVICE
DISPOSITIF DE VIDAGE DE RÉSERVOIR

(30) Priorität: 08.10.2012 AT 504332012
(43) Veröffentlichungstag der Anmeldung: 12.08.2015
(73) Patentinhaber: Siemens Mobility Austria GmbH, 1210 Wien (AT)
(72) Erfinder: CIPONE, Claudio, 1030 Wien (AT); ULREICH, Klaus, 7423 Pinkafeld (AT)
(74) Vertreter: Deffner, Rolf
(86) Internationale Anmeldenummer: PCT/EP2013/070502
(87) Internationale Veröffentlichungsnummer: WO 2014/056768

(56) Entgegenhaltungen:
- EP-A1- 2 305 530
- CH-A- 201 815
- US-A- 4 635 668
- US-A- 4 657 038

## Beschreibung

### Technisches Gebiet

Die Erfindung betrifft eine Tankentleerungseinrichtung für Frischwassertanks von Schienenfahrzeugen.

### Stand der Technik

Schienenfahrzeuge, insbesondere Passagierschienenfahrzeuge umfassen häufig Frischwassertanks zur Versorgung von Nasszellen, Küchen o.ä. Da diese Tanks Trinkwasser enthalten können sie bei längerem Stillstand des Fahrzeugs bei kalter Witterung einfrieren. Im Betrieb des Fahrzeugs besteht diese Gefahr nicht, da die Tanks im Allgemeinen im beheizten Innenraum, typischerweise in der Decke über der Nasszelle angeordnet sind. Friert der Inhalt eines Frischwassertanks, so kann das Fahrzeug nicht verwendet werden, da die sanitären Anlagen nicht betriebsbereit sind und muss in einer beheizten Halle erwärmt werden. Aufgrund der großen Wassermengen von ca. 300 Liter kann ein solcher Vorgang mehrere Tage dauern. Werden durch das frieren des Wassers Leitungen beschädigt, so müssen diese repariert werden. Zur Lösung dieses Problems sind Schienenfahrzeuge mit Frischwassertanks mit automatischen Entleerungseinrichtungen ausgestattet, welche bei unterschreiten einer bestimmten Temperatur des Tanks einen gefüllten Tank mittels eines Entleerungsventils ablassen. Diese Einrichtungen erfordern eine elektrische Energieversorgung, welche bei abgestellten Fahrzeugen durch eine Bordbatterie erfolgt. Es ist erforderlich, diese Entleerungseinrichtungen energiesparend auszuführen um den Schutz über längere Zeit (einige Wochen) aufrechterhalten zu können. Weiters soll die Entleerungseinrichtungen keine Fehlauslösungen vornehmen, da ein solches Fahrzeug (mit leerem Frischwassertank) nur sehr eingeschränkt verwendet werden kann bzw. die Wiederbefüllung nur in bestimmten Bahnhöfen erfolgen kann.

Die CH 201815 A offenbart eine automatisch wirkende Einrichtung für den Schutz von Leitungen von Schienenfahrzeugen vor dem Einfrieren.

### Darstellung der Erfindung

Der Erfindung liegt daher die Aufgabe zugrunde, eine Tankentleerungseinrichtung für Frischwassertanks von Schienenfahrzeugen anzugeben, welche Fehlauslösungen verhindert und stromsparend ist.
Die Aufgabe wird durch eine Tankentleerungseinrichtung mit den Merkmalen des Anspruchs 1 gelöst. Vorteilhafte Ausgestaltungen sind Gegenstand untergeordneter Ansprüche.

Dem Grundgedanken der Erfindung nach wird eine Tankentleerungseinrichtung für einen Frischwassertank eines Schienenfahrzeugs aufgebaut, wobei ein Thermoschalter mit dem Frischwasser thermisch gekoppelt ist und bei Unterschreiten einer bestimmten Temperatur des Tanks ein Zeitglied ansteuert, welches dadurch ein Entleerungsventil für einen bestimmte Zeitdauer öffnet, und wobei der Thermoschalter an einer Entleerungsleitung angeordnet ist.
Dadurch ist der Vorteil erzielbar, einen Schienenfahrzeugfrischwassertank bei Unterschreiten einer bestimmten Mindesttemperatur automatisch entleeren zu können. Erfindungsgemäß ist ein Thermoschalter vorgesehen, welcher so angeordnet ist, dass er die Temperatur des Frischwassers erfassen kann. Insbesondere ist es vorteilhaft, den Thermoschalter an jenen Teilen des Tanks, bzw. der Entleerungsanlage anzuordnen, welche bei Absinken der Außentemperatur zuerst durch einfrierendes Wasser verstopft werden. Die Entleerungsleitung führt das Wasser aus dem Wagenkasten ins Freie und ist der Umgebungstemperatur unmittelbar ausgesetzt, sodass der Thermoschalter an dieser Entleerungsleitung anzuordnen ist. Weiters würde eine vereiste Entleerungsleitung die Entleerung des Tanks ohnedies verhindern.

Eine Ausführungsform der Erfindung sieht vor, einen Thermoschalter mit einer Differenz zwischen dem Einschaltwert und dem Ausschaltwert von kleiner als 5 Kelvin einzusetzen. Konventionelle Thermoschalter weise wesentlich größere Schaltpunktdifferenzen auf, sodass die Entleerung bei wesentlich höheren Temperaturen als erforderlich eingeleitet wird. Konventionelle Thermoschalter weisen weder die erforderliche Schaltpunktgenauigkeit noch die erforderliche geringe Schaltpunkthysterese auf. Mit einem erfindungsgemäßen Thermoschalter (Präzisionsthermoschalter) kann die Auslösetemperatur deutlich näher an Null Grad Celsius dimensioniert werden, typischerweise auf einen Wert von 2 Grad Celsius. Ein solcher Thermoschalter weist eine Genauigkeit von einem Grad Celsius auf, sodass die Entleerung jedenfalls zwischen einem und drei Grad Celsius eingeleitet wird.
Konventionelle Thermostate hingegen müssen wegen ihrer Ungenauigkeiten auf wesentlich höhere Temperaturen eingestellt werden, wobei in besonders ungünstigen Fällen eine Entleerung schon bei ca. zehn Grad Celsius erfolgt.

Die Ausschaltschwelle kann aufgrund der hohen Präzision des erfindungsgemäßen Thermoschalters auf einen Wert von vier Grad Celsius bemessen werden, sodass der Thermoschalter bei einer Genauigkeit von einem Grad Celsius die Entleerung jedenfalls in einem Temperaturbereich zwischen drei und fünf Grad Celsius unterbricht. Ein solcher Thermoschalter weist eine Differenz zwischen dem Einschaltwert und dem Ausschaltwert von kleiner als 5 Kelvin auf.

Gebräuchliche Tankentleerungseinrichtungen sind mit einer Einrichtung zur Füllstandsmessung ausgestattet, eine solche ist bei gegenständlicher Erfindung nicht erforderlich. Dadurch ist der Vorteil erzielbar, eine Reduktion des Energieverbrauchs der Tankentleerungseinrichtung erzielen zu können, da die Füllstandsmessung meist mit einem Ultraschallsensor erfolgt und ein solcher für den Betrieb elektrischer Energie bedarf.
Der aktuelle Füllstand des Frischwassertanks ist bei gegenständlicher Tankentleerungseinrichtung unwesentlich, da der Thermoschalter ein Zeitglied ansteuert, welches ein Entleerungsventil für einen bestimmten Zeitraum öffnet. Dieser Zeitraum ist auf das Volumen des Tanks und die Abflußmenge pro Zeit durch die Entleerungsleitung ab zustimmen, sodass der Tank jedenfalls entleert wird. Dabei ist das Zeitglied typischerweise bei gebräuchlichen Tanks auf eine Entleerungsdauer von 30 Minuten einzustellen.

Eine weitere Ausführungsform der Erfindung sieht vor, die Energieversorgung des Zeitglieds nicht kontinuierlich mit Spannung zu versorgen, sondern diese Energieversorgung ebenfalls aus dem vom Thermoschalter geschalteten Signal zu entnehmen. Solcherart kann der Energieverbrauch der Tankentleerungseinrichtung während der Zeit bis zur Auslösung (Entleerungsbeginn) auf Null reduziert werden. Ein Thermoschalter weist keinen Energieverbrauch auf, das von ihm geschaltete Zeitglied verbraucht nur während der Entleerung Energie, ebenso das von dem Zeitglied angesteuerte Entleerungsventil. Solcherart kann eine Tankentleerungseinrichtung aufgebaut werden, die die Fahrzeugstromversorgung nur geringstmöglich belastet und dadurch die längstmögliche Einsatzdauer der Tankentleerungseinrichtung bei einer bestimmten Batteriekapazität gewährleistet.

### Kurzbeschreibung der Zeichnungen

Es zeigen beispielhaft:
- **Fig.1**: Tankentleerungseinrichtung gemäß dem Stand der Technik.
- **Fig.2**: Tankentleerungseinrichtung.
- **Fig.3**: Schaltung einer Tankentleerungseinrichtung.

### Ausführung der Erfindung

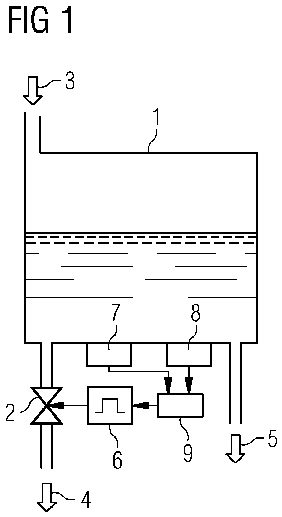

**Fig.1** zeigt beispielhaft und schematisch eine Tankentleerungseinrichtung gemäß dem Stand der Technik. Es ist ein Frischwassertank 1 eines Schienenfahrzeugs dargestellt, welcher einen Zufluß 3, eine Entnahmeleitung 5 zur Versorgung von Verbrauchern wie Waschbecken oder Küchen und einen Abfluß 4 zur Entleerung des Tanks 1 aufweist. Der Abfluß 4 ist mit einem Entleerungsventil 2 ausgestattet, welches elektrisch ansteuerbar und öffenbar ist wodurch der Inhalt des Tanks 1 in das Freie abfließt. Eine Steuereinrichtung 9 empfängt Sensorsignale von einem Ultraschallsensor 8 und einem Thermoschalter 7. Der Ultraschallsensor 8 ermittelt den aktuellen Füllstand des Tanks 1, der Thermoschalter 7 bestimmt die Temperatur des Tanks 1 bzw. die des darin enthaltenen Wassers und gibt bei Unterschreiten einer bestimmten Temperatur ein Signal an die Steuereinrichtung 9 ab. Diese Steuereinrichtung 9 bestimmt aus den Signalen des Thermoschalters 7 und des Ultraschallsensors die Notwendigkeit einer Entleerung, wobei beispielsweise ein bereits leerer Tank auch bei Unterschreiten einer bestimmten Temperatur nicht mehr zu einer Öffnung des Entleerungsventils 2 führt. Die Steuereinrichtung 9 steuert ein Zeitglied 6 an, welches nach dieser Ansteuerung das Entleerungsventil 2 für einen bestimmten Zeitraum öffnet.

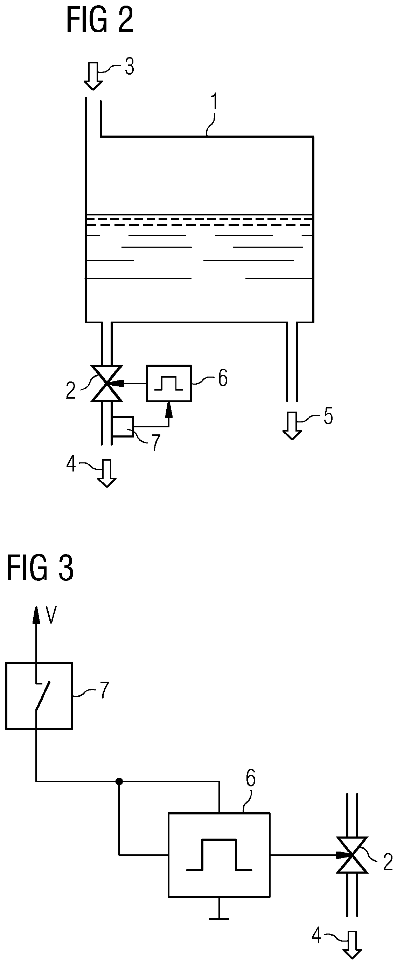

**Fig.2** zeigt beispielhaft und schematisch eine Tankentleerungseinrichtung. Es ist eine erfindungsgemäße Tankentleerungseinrichtung dargestellt, wobei der Tank 1 im Wesentlichen unverändert ist. Es ist ein Thermoschalter 7 vorgesehen, welcher an dem Abfluß 4 angeordnet ist. Durch die Montage an dieser Position kann der Thermoschalter 7 frühzeitig eine Auslösetemperatur erfassen, da diese Stelle wesentlich rascher auskühlt als der Tank 1. Der Thermoschalter 7 steuert unmittelbar ein Zeitglied 6 an, welches für einen bestimmten Zeitraum das Entleerungsventil 2 öffnet. Ein Ultraschallsensor 8 oder eine sonstige Füllstandsermittlung ist nicht vorgesehen, da eine solche bei einer erfindungsgemäßen Tankentleerungseinrichtung nicht erforderlich ist.

**Fig.3** zeigt beispielhaft und schematisch eine Schaltung einer Tankentleerungseinrichtung. Es ist die elektrische Schaltung einer Tankentleerungseinrichtung gemäß dem in Fig.2 gezeigten Ausführungsbeispiel dargestellt. Der Thermoschalter 7 ist in geöffnetem Zustand, also bei einer höheren Temperatur als der Auslösetemperatur gezeigt. Eine Spannungsversorgung V ist an einen Anschluß des Thermoschalters 7 geführt. Diese kann unmittelbar von der Fahrzeugbatterie entnommen werden. Der Ausgang des Thermoschalters 7 ist sowohl an den Steuereingang als auch an den Spannungsversorgungseingang des Zeitgliedes 6 geführt. Das Zeitglied 6 umfasst weiters einen Masseanschluß. Der Ausgang des Zeitgliedes 6 ist an den Steueranschluß des Entleerungsventils 2 geführt. Diese Schaltung weist in Ruhestellung keinen Energieverbrauch auf, wodurch die in der Fahrzeugbatterie gespeicherte Energie für einen wesentlich längeren Betrieb und somit eine wesentlich längere Schutzwirkung durch die Tankentleerungseinrichtung ausreicht. Nach einer Auslösung des Thermoschalters 7 und weiterhin niedriger Aussentemperatur verbleibt der Stromverbrauch des Zeitglieds 6 als elektrische Last an der Fahrzeugbatterie. Dies ist jedoch akzeptabel, da dazu die Tankentleerungseinrichtung bereits ihre Schutzwirkung entfaltet hat.

### Liste der Bezeichnungen

- 1: Tank
- 2: Entleerungsventil
- 3: Zufluß
- 4: Abfluß, Entleerungsleitung
- 5: Entnahmeleitung
- 6: Zeitglied
- 7: Thermoschalter
- 8: Ultraschallsensor
- 9: Steuereinrichtung
- V: Spannungsversorgung

## Patentansprüche

1. Tankentleerungseinrichtung für einen Frischwassertank (1) eines Schienenfahrzeugs, wobei ein Thermoschalter (7) mit dem Frischwasser thermisch gekoppelt ist, wobei der Thermoschalter (7) an einer Entleerungsleitung (4) angeordnet ist und bei Unterschreiten einer bestimmten Temperatur des Tanks (1) ein Zeitglied (6) ansteuert, welches dadurch ein Entleerungsventil (2) für einen bestimmte Zeitdauer öffnet, **dadurch gekennzeichnet, dass** diese Zeitdauer auf das Volumen des Tanks und die Abflußmenge pro Zeit durch die Entleerungsleitung so bemessen ist, dass der Tank jedenfalls entleert wird.

2. Tankentleerungseinrichtung nach Anspruch 1, **dadurch gekennzeichnet, dass** der Thermoschalter (7) eine Differenz zwischen dem Einschaltwert und dem Ausschaltwert von kleiner als 5 Kelvin aufweist.

3. Tankentleerungseinrichtung nach einem der Ansprüche 1 oder 2, **dadurch gekennzeichnet, dass** eine von dem Thermoschalter (7) an das Zeitglied (6) geleitete elektrische Spannung sowohl an den Energieversorgungsanschluß des Zeitglieds (6) als auch den Steuereingang des Zeitglieds (6) geführt ist.

4. Tankentleerungseinrichtung nach einem der Ansprüche 1 bis 3, **dadurch gekennzeichnet, dass** das Zeitglied (6) bei einer Auslösung durch den Thermoschalter (7) ein Entleerungsventil (2) für maximal 45 Minuten öffnet.

## Claims

1. Tank drainage device for a fresh water tank (1) on a rail vehicle, wherein a thermostatic switch (7) is thermally coupled to the fresh water, wherein the thermostatic switch (7) is arranged on a drainage line (4) and, in the event of the temperature in the tank (1) falling below a predefined temperature, triggers a timing element (6), which thereby opens a drainage valve (2) for a predefined period of time, **characterised in that** this period of time is measured on the volume of the tank and the discharge volume per unit time through the drainage line (4) so that the tank is emptied in any event.

2. Tank drainage device according to claim 1, **characterised in that** the thermostatic switch (7) has a difference of less than 5 Kelvin between the turn-on value and the turn-off value.

3. Tank drainage device according to one of claims 1 or 2, **characterised in that** an electrical voltage conducted from the thermostatic switch (7) to the timing element (6) is connected both to the energy supply terminal of the timing element (6) and to the control input of the timing element (6) .

4. Tank drainage device according to one of claims 1 to 3, **characterised in that** when triggered by means of the thermostatic switch (7) the timing element (6) opens a drainage valve (2) for a maximum of 45 minutes.

## Revendications

1. Dispositif de vidage de réservoir pour un réservoir d'eau fraîche (1) d'un véhicule ferroviaire, dans lequel un interrupteur thermique (7) est couplé thermiquement avec l'eau fraîche, dans lequel l'interrupteur thermique (7) est disposé au niveau d'une conduite de vidage (4) et lorsqu'une température déterminée du réservoir (1) est dépassée vers le bas commande un élément de temporisation (6), lequel ouvre ainsi une vanne de vidage (2) pour un laps de temps déterminé, **caractérisé en ce que** ce laps de temps est mesuré sur la base du volume du réservoir et le débit par unité de temps est mesuré à travers la conduite de vidage de sorte que le réservoir est vidé à chaque fois.

2. Dispositif de vidage de réservoir selon la revendication 1, **caractérisé en ce que** l'interrupteur thermique (7) présente une différence entre la valeur de mise en marche et la valeur de mise à l'arrêt inférieure à 5 Kelvin.

3. Dispositif de vidage de réservoir selon l'une des revendications 1 ou 2, **caractérisé en ce qu'**une tension électrique dirigée par l'interrupteur thermique (7) vers l'élément de temporisation (6) est guidée aussi bien vers le raccordement d'alimentation en énergie de l'élément de temporisation (6) que vers l'entrée de commande de l'élément de temporisation (6).

4. Dispositif de vidage selon l'une des revendications 1 à 3, **caractérisé en ce que** l'élément de temporisation (6) lors d'un déclenchement par le biais de l'interrupteur thermique (7) ouvre une vanne de vidage (2) pendant au maximum 45 minutes.
